# EUROPEAN PATENT SPECIFICATION

(11) **EP 3 435 781 B1**
(45) Date of publication and mention of the grant of the patent: **02.07.2025**
(21) Application number: 17775977.6
(22) Date of filing: 30.03.2017
(51) Int. Cl.: A23J 3/14, A23L 7/10, A23L 7/104, A23J 3/30, A23L 29/20, A23L 33/185, C12N 9/10, A23L 2/38, A23J 3/34

(54) **PROCESS FOR PRODUCING NON-DAIRY FOOD RPODUCT OF ENHANCED VISCOSITY**
VERFAHREN ZUR HERSTELLUNG VON MILCHFREIEN LEBENSMITTELN MIT ERHÖHTER VISKOSITÄT
PROCEDE DE PRODUCTION DE PRODUIT ALIMENTAIRE NON LAITIER A VISCOSITÉ AUGMENTÉE

(30) Priority: 01.04.2016 SE 1600119
(43) Date of publication of application: 06.02.2019
(73) Proprietor: Oatly AB, 211 19 Malmö (SE)
(72) Inventor: TRIANTAFYLLOU, Angeliki, 17455 Alimos (GR); CASTRO, Alejandra, 22350 Lund (SE); STORM, Matilda Ulmius, 24562 Hjärup (SE)
(74) Representative: AWA Sweden AB
(86) International application number: PCT/SE2017/000022
(87) International publication number: WO 2017/171601

(56) References cited:
- EP-A1- 2 943 077
- EP-B1- 2 943 077
- WO-A1-02/37984
- WO-A1-2007/060288
- WO-A1-2013/010037
- WO-A1-2014/123466
- WO-A1-2014/174149
- US-A1- 2015 237 885
- M. SALMENKALLIO-MARTTILA ET AL: "Effects of gluten and transglutaminase on microstructure, sensory characteristics and instrumental texture of oat bread", AGRICULTURAL AND FOOD SCIENCE, vol. 13, no. 1-2, 1 January 2004 (2004-01-01), FI, pages 138 - 150, XP055614165, ISSN: 1459-6067, DOI: 10.2137/1239099041838003
- NAI-CHI SIU ET AL: "Functional Properties of Oat Globulin Modified by a Calcium-Independent Microbial Transglutaminase", JOURNAL OF AGRICULTURAL AND FOOD CHEMISTRY, vol. 50, no. 9, 20 March 2002 (2002-03-20), US, pages 2666 - 2672, XP055614114, ISSN: 0021-8561, DOI: 10.1021/jf011163p
- MOTOKI M ET AL: "Transglutaminase and its use for food processing", TRENDS IN FOOD SCIENCE AND TECHNOLOGY, ELSEVIER SCIENCE PUBLISHERS, GB, vol. 9, no. 5, 1 May 1998 (1998-05-01), pages 204 - 210, XP002627572, ISSN: 0924-2244, DOI: 10.1016/S0924-2244(98)00038-7
- "Future of Flour: A Compendium of Flour Improvement.", 1 January 2006, AGRIMEDIA, article L. POPPER ET AL: "Vital wheat gluten", pages: 244 - 246, XP055268220
- DATABASE GNPD [online] MINTEL; 4 November 2014 (2014-11-04), ANONYMOUS: "Pineapple & Orange Oat Snack", XP055517325, retrieved from www.gnpd.com Database accession no. 2763373
- SHAND, P J ET AL.: "Transglutaminase treatment of pea proteins: Effect on physicochemical and rheological properties of heat-induced protein gels", FOOD CHEM, vol. 107, no. 2, March 2008 (2008-03-01), pages 692 - 699, XP022351967, ISSN: 0308-8146
- MOTOKI, M ET AL.: "Transglutaminase and its use for food processing", TRENDS FOOD SCI TECHNOL, vol. 9, no. 5, May 1998 (1998-05-01), pages 204 - 210, XP002627572, ISSN: 0924-2244
- MARTENSSON, O ET AL.: "The effect of yoghurt culture on the survival of probiotic bacteria in oat-based, non-dairy products", FOOD RES INT, vol. 35, no. 8, 2002, pages 775 - 784, XP008146502, ISSN: 0963-9969

## Description

### FIELD OF THE INVENTION

The present invention relates to a process for producing a non-dairy food product of enhanced viscosity.

### BACKGROUND OF THE INVENTION

Oat drinks ("oat milk") for use as cow milk substitutes (EP 731646 A1; US 5686123; US 6451369 A) and as a raw material for other non-dairy milk products are known in the art. They are preferred by many customers for various reasons, such as for their content of soluble β-glucan fiber beneficial to health, their lack of potentially allergenic proteins and of lactose, which cannot be digested by the majority of the global population.

In prior art processes for preparing oat milk the starting material such as oat flour or oat bran is heated to a temperature and for a time sufficient to substantially prevent the development of endogenous enzymatic activity, in particular lipase/lipoxygenase activity, but also β-glucanase activity. Oat milk known in the art may be also be termed "oat base" since, in addition to its use as a drink, in particular milk drink, it can be used as a base for the manufacture of other food products, such as oat yogurt, oat cream or oat batter, or be used as a food additive.

Due to the low fat content of oat milk (typically 0.5 % by weight) fat in form of vegetable oil, such as rapeseed oil, is often added to the product.

Oat base or milk can be used for preparing oat drinks by addition of sugar, flavorings, fruit extracts, etc. It is desirable for those drinks to be similar in taste, texture, and viscosity to corresponding drinks prepared from cow milk. This is not problematic as far as drinks of low viscosity, that is, of a viscosity similar to dairy milk, are concerned. A problem however arises in the use of oat base for the preparation of products corresponding to cow milk products of enhanced viscosity such as yogurt or sour cream. Cow milk products of enhanced viscosity like yogurt or sour cream are prepared by fermentation using cultures of Lactobacillus delbrueckii subsp. bulgaricus and Streptococcus thermophilus bacteria as such or in combination with other lactobacilli and bifidobacteria. Decrease of pH by lactic acid formed in the process coagulates milk protein, thereby substantially increasing the viscosity of the product.

Oat base and cow milk have a protein content of about 1 % by weight and about 3.5 by weight, respectively.

WO 2014/123466 A1 discloses a deamidated liquid oat base and a process for its manufacture.

Milk protein crosslinking and/or modifying enzymes such as transglutaminase, laccase, tyrosinase, peroxidase, sulfhydryl oxidase and protein glutaminase are used in the dairy industry to stabilize the structure of milk-based products. WO 2007/060288 A1 discloses a method of manufacturing soured fresh dairy products by the combined use of transglutaminase, an enzyme activating compound with oxidative or reducing properties such as yeast extract and glutathione, and an acidifying agent in form of a microbiological starter culture, a chemical acidifying agent and mixtures thereof, enabling compensating for loss of viscosity in the production of yogurt when using milk of a lower protein content. WO 2013/064736 A1 discloses a liquid enzyme formation comprising a polyol-water suspension of a milk protein crosslinking and/or modifying enzyme such as transglutaminase.

Marjatta Salmenkallio-Marttila et.al. "Effects of gluten and transglutaminase on microstructure, sensory characteristics and instrumental texture of oat bread" Agricultural and food science Vol. 13 (2004): 138-150; investigates effects of added gluten and transglutaminase on microstructure, instrumental texture and sensory characteristics of bread baked with 51% whole meal oat flour.

### OBJECTS OF THE DISCLOSURE

It is an object of the present disclosure to provide an oat drink or base of the aforementioned kind of substantially enhanced viscosity.

It is another object of the present disclosure to provide products of enhanced viscosity obtainable from said oat base or drink by fermentation.

It is a further object of the present disclosure to provide corresponding processes.

Further objects of the present disclosure will be evident from the following summary of the invention, the description of preferred embodiments thereof, and the appended claims.

### SUMMARY OF THE INVENTION

The invention is as defined by the independent claim. Further embodiments are set out in dependent claims.
Thus, according to the invention, there is disclosed a process for producing a non-dairy food product of enhanced viscosity, comprising mixing of aqueous liquid deamidated oat base and vegetable protein isolate comprising or consisting of vegetable protein isolate selected from pea protein isolate, potato protein isolate, faba bean protein isolate, chickpea protein isolate, and lentil protein isolate, thereby providing a mixture of the liquid deamidated oat base and the vegetable protein isolate; crosslinking of glutamine and lysine units of the protein isolate by means of transglutaminase.

According to the present disclosure, there is provided a modified aqueous oat base or drink, in the following referred to as "modified oat base" of the aforementioned kind of substantially enhanced viscosity. The viscosity of the modified oat base is obtained by enzymatic means.

According to an important aspect of the disclosure the viscosity of the modified oat base is not obtained by adding one or more viscosity modifying agents or thickeners, that is, agents forming highly viscous aqueous solutions such as xanthan gum, sodium alginate, hydroxypropyl methyl cellulose, carrageenan, agar, gelatin, and the like.

The term oat base as used herein relates to aqueous liquid oat products of low viscosity and having a high content of maltose obtained or obtainable from oats by treatment with starch-degrading enzymes, such as α- and/or β-amylase. The term oat drink as used herein relates to ready-to-drink, pasteurized oat base, which may contain additives which do not substantially affect the viscosity thereof, such as sodium chloride, vegetable oil such as, for instance, rapeseed oil, sweetener, vitamin, and flavoring.

The viscosity enhanced oat base or drink is obtained by cross-linking oat protein comprised by the oat base or drink supplemented by vegetable protein isolate, in particular by denaturated vegetable protein isolate.

The protein supplemented oat base or drink is crosslinked by means of transglutaminase.

According to another important aspect the oat base is a deamidated oat base. According to a preferred aspect deamidation is carried out in the presence of calcium carbonate.

According to a further preferred aspect added vegetable protein isolate consists of or comprises denaturated vegetable protein isolate, in particular thermally denaturated vegetable protein.

The vegetable protein isolates comprise or consist of vegetable protein isolate selected from pea protein isolate, potato protein isolate, faba bean protein isolate, chickpea protein isolate, lentil protein isolate. Pea protein isolate being particularly preferred.

It is preferred for the mixture of deamidated oat base or drink to be heated to a temperature of 80° or more prior to the addition of transglutaminase.

Further disclosed herein is a process for producing an oat base of enhanced viscosity, comprising: providing an aqueous oat base or drink optionally comprising a viscosity promoting agent; providing a native vegetable protein isolate and/or a denaturated vegetable protein isolate; combining the aqueous oat base or drink and the vegetable protein isolate; heating the combination of aqueous oat base or drink and protein isolate to a temperature of 80 °C or more and keeping it at this temperature for a time sufficient to form a combination of aqueous oat base or drink and heat-treated vegetable protein isolate; bringing the combination of aqueous oat base or drink and heat-treated vegetable protein isolate to a temperature of from 35 °C to 65 °C; adding a protein cross-linking amount of transglutaminase to the combination of aqueous oat base or drink and heat-treated vegetable protein isolate while keeping the mixture at said temperature of from 35 °C to 65 °C for a time required to increase viscosity by a factor of 2 or more, in particular of 5 or more, to form a viscosity enhanced oat base or drink; inactivating transglutaminase by heating the viscosity enhanced oat base or drink to a temperature of 80 °C or more, in particular of 90 °C or more; cooling the viscosity enhanced oat base or drink to one of: room temperature or below if desired to be stored for a longer time or to a temperature suitable for further processing; with the proviso that protease activity is excluded from the process.

Also disclosed is an oat base or drink of enhanced viscosity obtainable by the process of the disclosure and its use as a food, a food additive or a starting material for production of a food, all intended for human consumption, in particular for the production of yogurt, sour cream, and fresh cheese.

This disclosure is based on the insight that the vegetable protein isolate is to be used preferably in denaturated form and to be additionally denaturated by heat treatment during processing. A most preferred vegetable protein isolate is a pea protein isolate, in particular in denaturated form.

A preferred amount of added vegetable protein is from 0.5 % or 1 % by weight to 2 % by weight or more, such as to 3 % by weight or more, and even up to 4 % or 5 % or 7 % by weight or more.

A preferred aqueous oat base has a dry matter content of from 7 to 15 % by weight, preferably of about 10 % by weight, the oat base dry matter comprising from 10 % to 50 % by weight of maltose or of a mixture of maltose and glucose, from 30 % to 80 % by weight of maltodextrin.

Preferred heat treatment conditions comprise the combination of a denaturation temperature of from 80 °C or more, in particular of 90 °C or more, in particular of about 95 °C, in combination with a denaturation period of from 5 min to 60 min, in particular of from 10 min to 30 min.

Dairy yogurt has viscosity of from about 2000 Pa·s (stirred yogurt) to about 5000 Pa·s (Greek and Turkish yogurt). A process enhances viscosity by factor of 2 or 5 or more and even by a factor of 10 or more, such as to obtain a viscosity of 10000 Pa·s or more and even of 20000 or more, which corresponds the viscosity of curd. In comparison the viscosity of a corresponding fermented product obtained by omitting protein cross-linking below 1000, typically in the range of 50 Pa·s - 500 Pa·s.

Preferred vegetable protein isolates contain about 14 % by weight or more, more preferred 15 % or more, such as about 17 % and even up to 20 % by weight of glutamine/glutamic acid and about 5 % or more, more preferred about 6 % by weight or more, such as about 7 % or 8 % by weight of lysine in combination. Pea (Pisum sativum L.) protein such as in form of pea protein isolate is the most preferred protein for use in the process. Pea protein enhances viscosity substantially more than other vegetable proteins investigated, such as lentil, faba bean, potato, hemp, canola, and oat protein. Preferred vegetable proteins have an isoelectric point of from about 4.0 to about 5.0, in particular of from about 4.2 to 4.6, most preferred of about 4.4.

A preferred amount of added transglutaminase is from 0.1 U/ to 5 U/g, in particular from 0.2 U/g to 2 U/g, most preferred about 1 U/g.

In addition to the enhancement of viscosity a process enhances elastic modulus such as from below 100 Pa to 500 Pa or 1000 Pa or more.

Furthermore a product of a process has higher yield point, in particular one higher by a factor of 1.5 or 2 or more, the yield point being the strain point at which the network of the gel breaks. The process thus provides products with improved gel properties, that is, stronger gels.

A viscosity promoting agent is one that does not raise or does only raise insignificantly, such as by a factor of less than 1.5 or less than 1.2 or 1.1, the viscosity of an aqueous media in which it is dissolved at a concentration of up to 5 % by weight. A preferred viscosity promoting agent is calcium carbonate. Another preferred viscosity promoting agent is a combination of magnesium carbonate and calcium carbonate.

It is preferred for the cereal oats suspension to be heated for protein crosslinking to a temperature of from about 50 °C to about 75 °C for a time sufficient to produce an oat base of desired composition while controlling its viscosity by varying the amount and/or kind of added vegetable protein and/or the amount of transglutaminase.

The control is also possible by using a combination of vegetable protein from different sources, such as, for instance, combinations of pea protein isolate, potato protein isolate, faba bean protein isolate, chickpea protein isolate, lentil protein isolate.

The oat base or drink with improved viscosity and products made from it differ from prior art oat bases and corresponding products made therefrom by their substantially enhanced viscosity. The use of transglutaminase in the process has no or only insignificant effect on the taste of the products.

According to a preferred aspect the viscosity enhanced oat base or drink can be used for the production of non-dairy cheese.

The oat base or drink with enhanced viscosity can be employed as starting material in a fermentation process for the manufacture of a fermented non-dairy product such as yogurt and cheese, the process comprising: bringing the oat base or drink of enhanced viscosity to a fermentation temperature of from about 35 °C to about 50 °C, in particular of about 43 °C; adding a fermentation starter culture, in particular a yogurt or cheese starter culture; maintaining the cereal suspension or oat base of enhanced viscosity at the fermentation temperature for a time period sufficient to form a fermented product, in particular a non-dairy yogurt-like or cheese-like product, such as for a time period of from 8 h to 24 h, in particular of from 12 h to 15 or 18 h.

According to a preferred aspect a minor amount of sugar, such as from 0.2 % by weight or 0.5 % by weight or 0. 7 % by weight and up to 1 % by weight of dry matter, is added at the start or during the process for nourishment of the yogurt culture. According to another preferred aspect a buffering agent is added at the start or during the process to stabilize pH, in particular at a pH of less than 6.0, in particular of less than 5.0, most preferred at about 4.5.

It is preferred not to agitate the cereal suspension by stirring during fermentation so as to not jeopardize the gellous nature of the product.

Further disclosed herein is a process for producing a fermented non-dairy product of enhanced viscosity, comprising: providing deamidated oat base or drink optionally comprising a viscosity promoting agent; providing native and/or denaturated vegetable protein isolate; mixing the oat base or drink and the protein isolate; heating the mixture of oat base or drink and protein isolate to a temperature of 80 °C or more, in particular of 90 °C or more, most preferred of about 95 °C for from 5 min to 60 min, in particular from 10 min to 30 min; cooling the mixture; adding transglutaminase and a fermentation culture to the mixture; keeping the mixture comprising transglutaminase and fermentation culture at a fermentation temperature, such as at a temperature of from 35 °C to 50 °C, in particular of about 43 °C, for a time period sufficient for forming a fermented product, in particular a yogurt-like or curd-like product, such as for a time period of from 8 h to 24 h, in particular of from 12 h to 15 or 18 h; optionally destroying enzymatic activity by heating the fermentation product; cooling the fermented product to room temperature or below.

According to a preferred aspect the pH of a process is controlled by, prior to incubation with transglutaminase, adjusting and/or holding the mixture of deamidated oat base and vegetable protein isolate at a pH substantially higher than that of the isoelectric point of the vegetable protein isolate, such as higher by 1.0 pH units, in particular higher by 1.5 pH units or 2.0 pH units or more.

Preferred fermented products obtainable by the process are non-dairy yogurt, non-dairy sour cream, and non-dairy fresh cheese.

In the following the disclosure will be described in more detail by reference to a number of preferred embodiments thereof.

### DESCRIPTION OF PREFERRED EMBODIMENTS

### Material and Methods

*Oat kernels:* Dehulled, steam treated, wet ground or dry ground.

*Oat bran (Frebaco Kvarn AB, Lidköping, Sweden):* Prepared from steam treated Swedish oat grain by grinding in a rolling mill. Composition (% by weight): Protein 18, fat 7, carbohydrate 45, fiber 16 %, water 9.5.

*Enzymes:* Transglutaminase, alpha-amylase, beta-amylase as well as yogurt and fresh cheese products, such as sour cream, quark and cream cheese, are available from various commercial sources such as Danisco DuPont (Yomix^{™}, Denmark) and Christian Hansen (YoFlex^{™}, eXact^{™}; Denmark). Prior to use transglutaminase and yogurt culture were dissolved in tap water (15 U/g and 0.001-0.2 g/g, respectively).

*Alpha-amylase activity:* One Ceralpha unit is defined as the amount of enzyme required to release one micromole of p-nitrophenol from BPNPG7 (non-reducing end blocked p-nitrophenyl maltoheptaoside) in one minute under defined assay conditions: http://secure.megazyme.com/files/BOOKLET/K-BETA3_1010_DATA.pdf

*Beta-amylase activity:* One BNPβ-G3 (p-nitrophenyl-ß-D-maltotrioside) unit is defined as the amount of enzyme required to release one micromole of p-nitrophenol from PNPβ-G3 in one minute under defined assay conditions: http://secure.megazyme.com/files/BOOKLET/K-BETA3_1010_DATA.pdf.

*Transglutaminase activity:* Determined by the hydroxamate method. One unit corresponds to the amount of enzyme generating 1 µmol of hydroxamic acid per min at pH 6.0.

*Viscosity:* Measured with Kinexus Pro+, Malvern Instruments, UK; http://www.malvern.com/en/producs/product-range/kinexus-range/kinexus-por-plus/.

### EXAMPLE 1 (not according to the present invention).

### Process for producing the viscosity-improved oat base of the disclosure from a state-of-the art oat base

*Materials:* Oat base produced according to EP 1124441 A1 containing about 1 % by weight of oat protein, to which rapeseed oil had been added to rise the total fat content to about 3 % by weight; transglutaminase ACTIVA TG-WM^{™} (100 U/g), Ajinomoto (Japan); pea protein, Nutralys^{™} S85F and F85F containing about 80 % by weight of protein (Roquette, France); YoMix^{™} 511 yogurt culture, Danisco DuPont (Denmark); rapeseed oil (AAK, Sweden); granulated sugar. Aqueous solutions were prepared for addition during fermentation: a) 15 U/g transglutaminase solution b) 1.8 % by weight Yomix^{™} 511 solution.
Pea protein (3.8 g) was added to 94 g oat base in a glass flask and the mixture shaken to disperse the protein. The flask was immersed in a boiling water bath of 95 °C and kept at this temperature for 10 min, then cooled to room temperature by immersing it in cold water. The mixture was used as starting material.
*First variety of the process of the invention: Simultaneous cross-linking and fermentation.* The following components were admixed with the starting material: 265 µl transglutaminase solution (1 U/g protein); 340 µl YoMix solution (0.0006 %); 1.15 g rapeseed oil (to make total fat content about 4 % by weight); 0.69 g of granulated sugar. The mixture was shaken to mix and dissolve the components, then kept in a water bath of 43 °C overnight. The reaction was quenched by bringing the reaction mixture to boiling in a microwave oven, followed by shaking and renewed heating so as to bring it to the boiling point. The mixture was cooled and stored in a refrigerator for analysis.
*Second variety of the process of the invention: Consecutive cross-linking and fermentation.* Transglutaminase solution (265 µl, 1 U/g protein) was added to the starting material (about 100 g). The mixture was stored for 3 h in a water bath of 50 °C and agitated once hourly. The reaction was quenched by bringing the reaction mixture to boiling in a microwave oven followed by shaking and renewed heating so as to bring it to the boiling point in the oven. The cooled product is a viscosity enhanced oat base or oat drink of the invention. It can be used as such as a food product or in the manufacture of food products or be fermented. If used for fermentation, the following agents were added to the cooled viscosity enhanced oat base or oat drink: 340 µl YoMix solution (0.006 %), 1.15 g rapeseed oil to make total fat content about 4 % by weight); 0.69 g of granulated sugar (0.69 % by weight); it is however within the ambit of the invention to add rapeseed oil and/or granulated sugar at an earlier stage of the process. The mixture was incubated overnight in a water bath of 43 °C. The so produced non-dairy yogurt was cooled and kept in a refrigerator for analysis.

### EXAMPLE 2. Crosslinking efficacy of different protein isolates

A number of vegetable protein isolates were included to demonstrate their crosslinking properties at a total protein content of 4 % by weight in deamidated oat base. The results were confirmed by rheology measurements, illustrated in Table 1 (consecutive crosslinking and fermentation) and Table 2 (simultaneous crosslinking and fermentation). Oat base without added protein isolate resulted in zero shear viscosity of about 50 Pa·s, elastic modulus (G') of about 5 Pa and a yield point of about 1.

**Table 1. Crosslinking effect of transglutaminase on fermented products of combinations of protein isolates and deamidated oat base, consecutive crosslinking and fermentation**

| *Protein isolate added to a content of 4 % total protein* | *Viscosity, Pa·s* | *Elastic modulus Pa'* | *Yield point* |
|---|---|---|---|
| Pea (Nutralys S85F) | 2 000 | 300 | 0.9 |
| Chickpea (FCPP40) | 3 000 | 200 | 1.1 |
| Pea (Pisane C9) in combination with deamidated oat drink | 8 000 | 800 | 1 |

**Table 2. Crosslinking effect of transglutaminase on fermented products of combinations of protein isolates and deamidated oat base, simultaneous crosslinking and fermentation**

| *Protein isolate added to a content of 4 % total protein* | *Viscosity, Pa·s* | *Elastic modulus Pa* | *Yield point* |
|---|---|---|---|
| Pea (Nutralys S85F) | 6 000 | 800 | 1.9 |
| Potato Solanic 200) | 3 000 | 300 | 0.9 |
| Faba bean (Vitessence 3600) | 18 000 | 1 200 | 2.2 |
| Lentil (Vitessence 2550) | 2 000 | 300 | 1.4 |
| Chickpea (FCPP40) | 4 000 | 300 | 1.6 |
| Pea (Pisane C9) in combination with deamidated oat drink | 40 000 | 5 000 | 2 |

### EXAMPLE 3. Crosslinking efficacy of different starting materials

An important factor for crosslinking properties is the nature of the protein isolate, as demonstrated in Example 2. Another important factor is whether a protein isolate had undergone a heat treatment prior to crosslinking, as illustrated in Table 3. The effect of heat treatment seems however not to be of a general nature but limited to certain protein isolates, for example pea protein isolate. According to the invention properties of the resulting gel or curd can be adjusted by varying time and/or temperature of heat treatment. Higher temperatures and/or longer periods of treatment result in increased viscosity and gel strength.

The inclusion of deamidated oat base or oat drink and addition of a viscosity promoting agent are additional factors affecting crosslinking properties and viscosity. The combination of oat base and pea protein that had not been heat-treated prior to transglutaminase incubation did not thicken, while heat treatment resulted in slightly increased viscosity.

**Table 3. Crosslinking effect of transglutaminase on fermented products of heat-treated (10 min, 95°C) and non-heat-treated combinations of protein isolates and deamidated oat drink, consecutive/simultaneous crosslinking and fermentation**

| *Protein isolate* | | *Viscosity, Pa·s* | *Elastic modulus, Pa* | *Yield point* |
|---|---|---|---|---|
| ***Consecutive*** | | | | |
| Pea (Nutralys S85F) | Heated | 2 000 | 200 | 1 |
| Pea (Nutralys S85F) | Non-heated | 300 | 10 | 1 |
| Potato (Solanic 200) | Heated | 5 000 | 1 800 | 1.5 |
| Potato (Solanic 200) | Non-heated | 7 000 | 600 | 0.6 |

| ***Simultaneous*** | | | | |
|---|---|---|---|---|
| Pea (Nutralys S85F) | Heated | 17 000 | 800 | 1.6 |
| Pea (Nutralys S85F) | Non-heated | 4 500 | 550 | 1.6 |
| Potato (Solanic 200) | Heated | 1 000 | 1 700 | 1.1 |
| Potato (Solanic 200) | Non-heated | 2 000 | 1 700 | 0.9 |

Application of the same treatment to the combination of deamidated oat drink and pea protein in absence of heat-treatment resulted in a somewhat thick gel while heat-treatment provided a strong gel or curd. The effects of deamidated oat drink were confirmed by rheology measurements, illustrated in Table 4. The inclusion of calcium carbonate (corresponding to a calcium content of about 120 mg/100 ml) as viscosity promoting agent to the oat base increased viscosity and provided an even stronger gel or curd.

**Table 4. Crosslinkina effect of transalutaminase on fermented products of combinations of pea protein isolate and oat drinks, consecutive/simultaneous crosslinking and fermentation. The consecutive/simultaneous process involving non-deamidated oat drink is not according to the present invention.**

| *Oat drink* | | *Viscosity, Pa·s* | *Elastic modulus, Pa* | *Yield* |
|---|---|---|---|---|
| ***Consecutive*** | | | | |
| *Deamidated* | Heated | 2 000 | 200 | 1 |
| | Non-heated | 300 | 10 | 1 |
| *Non-deamidated* | Heated | 600 | 90 | 1 |
| | Non-heated | 40 | 1 | 0.9 |
| ***Simultaneous*** | | | | |
| *Deamidated* | Heated | 17 000 | 800 | 1.6 |
| | Non-heated | 4 500 | 550 | 1.6 |
| *Non-deamidated* | Heated | 5 500 | 500 | 1.4 |
| | Non-heated | 150 | 10 | 1 |

### EXAMPLE 4

Adjusting/holding the pH to/at a pH substantially different from that of the isoelectric point during incubation with transglutaminase increased viscosity and provided a stronger gel or curd.

The isoelectric point of vegetable protein isolates is at about pH 4.5; for pea protein isolates is at about pH 4.4. Table 5 illustrates the increase in viscosity upon adjusting the pH of oat drink comprising pea protein isolate to pH 6.5 and 7.5 prior to incubation with transglutaminase and fermentation. Aqueous sodium hydroxide and hydrochloric acid were used for pH adjustment.

**Table 5. Crosslinking effect of transglutaminase on fermented products with pH adjusted different from isoelectric point, consecutive crosslinking and fermentation. The consecutive crosslinking and fermentation process involving non-deamidated oat drink is not according to the present invention.**

| *Oat drink* | *pH* | *Viscosity, Pa.s* | *Elastic modulus, Pa* | *Yield point* |
|---|---|---|---|---|
| Deamidated | 6.5 | 2 000 | 50 | 0.9 |
| Deamidated | 7.5 | 3 000 | 200 | 1 |
| Non-deamidated | 6.5 | 200 | 1 | 0.5 |
| Non-deamidated | 7.5 | 1 500 | 200 | 1 |

## Claims

1. Process for producing a non-dairy food product of enhanced viscosity, comprising mixing of aqueous liquid deamidated oat base and vegetable protein isolate comprising or consisting of vegetable protein isolate selected from pea protein isolate, potato protein isolate, faba bean protein isolate, chickpea protein isolate, and lentil protein isolate, thereby providing a mixture of the liquid deamidated oat base and the vegetable protein isolate; crosslinking of glutamine and lysine units of the protein isolate by means of transglutaminase.

2. The process of claim 1, wherein the mixture is heated to a temperature of 80° or more prior to the addition of transglutaminase.

3. The process of claim 1, wherein the added vegetable protein isolate consists of or comprises denaturated vegetable protein.

4. The process of claim 3, wherein the vegetable protein isolate consists of pea protein isolate.

5. The process of claim 1, comprising, prior to cross-linking with transglutaminase, adjusting and/or holding the mixture at a pH substantially higher than that of the isoelectric point of the vegetable protein isolate, higher by 1.0 pH units, in particular higher by 1.5 pH units or 2.0 pH units or more.

## Patentansprüche

1. Verfahren zur Herstellung eines milchfreien Lebensmittels von erhöhter Viskosität, umfassend Mischen von wässriger flüssiger deamidierter Haferbase und pflanzlichem Proteinisolat, das pflanzliches Proteinisolat umfasst oder daraus besteht, das unter Erbsenproteinisolat, Kartoffelproteinisolat, Puffbohnenproteinisolat, Kichererbsenproteinisolat und Linsenproteinisolat ausgewählt ist, wodurch eine Mischung der flüssigen deamidierten Haferbase und des pflanzlichen Proteinisolat bereitgestellt wird; Vernetzen von Glutamin- und Lysineinheiten des Proteinisolats durch Transglutaminase.

2. Verfahren nach Anspruch 1, wobei die Mischung auf eine Temperatur von 80 °C oder höher vor Zusetzen von Transglutaminase erhitzt wird.

3. Verfahren nach Anspruch 1, wobei das zugesetzte pflanzliche Proteinisolat aus denaturiertem pflanzlichem Protein besteht oder dieses umfasst.

4. Verfahren nach Anspruch 3, wobei das pflanzliche Proteinisolat aus Erbenproteinisolat besteht.

5. Verfahren nach Anspruch 1, das, vor Vernetzen mit Transglutaminase, Einstellen und/oder Halten der Mischung bei einem pH-Wert umfasst, der wesentlich höher als derjenige des isoelektrischen Punkts des pflanzlichen Proteinisolats, 1,0 pH-Einheiten höher, insbesondere 1,5 pH-Einheiten oder 2,0 pH-Einheiten oder mehr höher ist.

## Revendications

1. Procédé de production d'un produit alimentaire non laitier à viscosité améliorée, comprenant le mélange d'une base d'avoine désamidée liquide aqueuse et d'un isolat de protéines végétales comprenant ou constitué d'un isolat de protéines végétales choisi parmi un isolat de protéines de petit pois, un isolat de protéines de pomme de terre, un isolat de protéines de féverole, un isolat de protéines de pois chiche et un isolat de protéines de lentille, fournissant ainsi un mélange de la base d'avoine désamidée liquide aqueuse et de l'isolat de protéines végétales ; la réticulation des motifs glutamine et lysine de l'isolat de protéines au moyen de la transglutaminase.

2. Procédé selon la revendication 1, dans lequel le mélange est chauffé à une température de 80 °C ou plus avant l'ajout de la transglutaminase.

3. Procédé selon la revendication 1, dans lequel l'isolat de protéines végétales ajouté est constitué de ou comprend des protéines végétales dénaturées.

4. Procédé selon la revendication 3, dans lequel l'isolat de protéines végétales est constitué d'un isolat de protéines de petit pois.

5. Procédé selon la revendication 1, comprenant, avant la réticulation avec la transglutaminase, l'ajustement et/ou le maintien du mélange à un pH sensiblement supérieur à celui du point isoélectrique de l'isolat de protéines végétales, supérieur de 1,0 unité de pH, en particulier supérieur de 1,5 unité de pH ou de 2,0 unités de pH ou plus.
